# EUROPEAN PATENT SPECIFICATION

(11) **EP 2 355 405 B1**
(45) Date of publication and mention of the grant of the patent: **10.07.2013**
(21) Application number: 10184297.9
(22) Date of filing: 30.09.2010
(51) Int. Cl.: H04L 12/24

(54) **System for Searching for Different Devices in a Tree-Based Data Storage Device**
System zum Suchen von verschiedenen Vorrichtungen in einer Datenspeichervorrichtung auf Verzeichnisbasis
Système pour la recherche de différents dispositifs dans un dispositif de stockage de données arborescent

(30) Priority: 27.01.2010 EP 10151801
(43) Date of publication of application: 10.08.2011
(73) Proprietor: Ricoh Company, Ltd, Ohta-ku Tokyo 143-8555 (JP)
(72) Inventor: Rüskens, Frank, 40472, Düsseldorf (DE)
(74) Representative: Schwabe - Sandmair - Marx

(56) References cited:
- US-A1- 2003 204 640
- US-B1- 6 226 788
- MIN-JEONG KIM ET AL: "Indexing techniques for MIB considering the CMIS operations", IEEE GLOBECOM 1996. COMMUNICATIONS: THE KEY TO GLOBAL PROSPERITY. CONFERENCE RECORD (CAT. NO.96CH35942) IEEE NEW YORK, NY, USA, vol. 3, 18 November 1996 (1996-11-18), pages 1862-1866 VOL., XP002635340, ISBN: 0-7803-3336-5
- MCCLOGHRIE HUGHES LAN SYSTEMS K ET AL: "Management Information Base for Network Management of TCP/IP-based internets: MIB-II; rfc1213.txt", IETF STANDARD, INTERNET ENGINEERING TASK FORCE, IETF, CH, 1 March 1991 (1991-03-01), XP015007001, ISSN: 0000-0003

## Description

The present invention concerns a method for accessing data related to network devices in an object-composition based environment according to claim 1 and a corresponding system according to claim 9.

In accordance with the prior art, a local system or a distributed system of devices has to be controlled and maintained. The devices can be office machines such as printers, copiers, facsimile devices and so on, or also - in view of the upcoming "electronic household" - devices such as refrigerators, washing machines, TVs, mobile phones and the like. These different devices have to be accessed through other entities such as for example personal computers or servers, or sometimes directly. Known systems, for example, gather data relating to the status or condition of these different devices under a system address or network address of the corresponding device, wherein said device is only accessible through other system entities.

If other devices are added, these may be represented by further object models or their classes, so that it is necessary to adapt the system to these new software representations of the added device. To be able to flexibly add further devices as plug-ins to the network, a cache should be used having the structure of cache has been proven to be a tool to deal with all necessities if further Java-related software representations of devices are added to the overall system.

However, if data has to be stored, which data is related to a specific device represented in the tree structure of the cache, this data will usually be stored by mapping the data to the position of the device in the tree structure of the cache. This tree structure is known to consist of roots and nodes providing a full qualified name (FQN) as an address of a device which address provides the description of the path leading to the software object of the device working as a software representation of the device in the cache.

Therefore, if a device or devices is/are searched for in the cache, having particular data or capabilities, the search will not be successful, because the data or capabilities are not stored under the FQN of the device but under a sub-ordinate FQN which map follows the FQN of the device.

US 2003/204640 A1 pertains to a method according to the preamble of claim 1.

US 6,226,788 B1 pertains to a network management system.

The present invention is defined by the subject-matter of the appended claims.

It is an object of the invention to overcome at least one of the drawbacks of the related prior art at least in part.

In particular, it is an object of the present invention to improve the searcheability and in particular the accessibility of device objects in a complex system and of device-related data of said system.

These objects are solved at least in part by the subject-matter of the independent claims. The features specified in the dependent claims provide advantages and should also be inventive in combination with the features of the independent claims.

In accordance with the present invention, the system can consist of a large number of dependent devices or "child" devices which can be accessed through governing devices or "parent" devices. The data collected from the different dependent or child devices are collected through the governing or parent devices and transmitted to a server in order to be stored temporarily in a temporary data memory device, in particular a cache. The 'data memory device, e.g. cache should provide a structure which allows to picture a real system structure for instance of a network, so that references to objects, e.g. printers, HDD, etc., can be related to memory areas or the like, in the tree of nodes of the tree-based structure of the cache. As indicated, a tree-based data storage structure is an example of a beneficial memory structure for the purpose of the present invention. For instance a cache of a server may provide such a structure. However, also other storage structures for example using pointers, may be suitable to accomplish a traceable storage structure for marshalling data of device objects and their composition in accordance with the present invention.

In accordance with an interesting aspect of the invention, object roots in the tree-based cache storage structure are supplemented with additional information to enable the system to assign data stored under a sub-sequent FQN to the FQN of the assigned object root. This additional information can be stored in an additional cache or a separate section of the cache of the server.

Accordingly, if a device is searched having particular capabilities or being related to particular data, the search will be terminated by retrieving the FQN of the object composition root of device and not the FQN of a subsequent node which does not allow to provide the searched device, i.e. its software representation in the Java-based object composition.

A cache with a tree structure comprises a root as a top node of a tree structure based storage and nodes, as storage places/areas for storing data addresses/references of object entities and/or other nodes. Furthermore, such a cache includes entities as independent objects storing their own information. In accordance with the present invention a regularly occurring object is used to generate composition references which are held in a memory device in related but separate meta entity containers (MECs) storing these references to entities and/or other meta entity containers.

As a top reference of an object composition, there is an object composition root. Due to the provision of the additional storage structure with the reference defining the composition of objects (e.g. devices as printers, interfaces, HDD, CD or DVD drivers, and others) following each other the invention allows for retrieving and manipulating of searchable data related to the particular objects. This is realised in particular by marshalling into an index of searchable data the related object composition root. In particular, it may be an option to avoid storing of composition-related data in the matching entity. Accordingly, if a search is conducted to find a particular entity, the result will be the object composition root as a search key to find this particular entity via assigned entities. Of course, if a particular device type is looked for, it is also possible that the search result will be a list of object compositions roots, each one suitable to traverse through compositions of assigned entities to end up at the different entities belonging to the particular device type.

Thus, the storage structure according to the invention furthermore provides a mapping structure of meta entity containers related to child devices to their assigned parent devices, i.e. their meta entity containers.

If necessary, on the basis of data retrieved from the system database, it can be necessary to store the corresponding data in the cache of the system server, for example in order to access data of the dependent or child devices through an address of governing or parent device and an additional indication like the address of the dependant or child device or a synonym thereof. This is, for example to explore e.g. whether a child device has a specific software version which needs to be updated.

Accordingly, it is also important in accordance with the invention to enhance the flexibility of storing data in a database through an exchange of data between the system cache and the system database and also to improve the accessibility data related to of the child devices through an address of the connected parent devices and e.g. an additional address indication related to the corresponding child device.

In accordance with the invention, a system composed of a number of devices is to be controlled with respect to storing and accessing data relating to the different devices. The temporary data memory device preferably has the structure of a tree of nodes, wherein the cache memory can in particular have the structure of the known JBoss™ cache memory device. In such a JBoss™ cache, each node is uniquely referenced by its fully qualified name (FQN) and can contain arbitrary objects stored as key-value pairs. This JBoss™ cache provides a basis for extendable data structures by means of arbitrary semantic topologies. Thus, it is possible to add address related data to a node storing information of a child device like an office machine, so that it is possible to find out the relation between the child device and the child device data as well as the relation between the parent device and the child device data.

In accordance with the present invention, the system has to be controlled and supplied with data and can consist of a large number of office devices such as printing devices, scanners, plotting devices, multi-function office machines and the like, wherein each of these different entities has to be accessed through a specific data model. In accordance with the present invention, the data is transformed on the basis of a loader process .

If the indexing of an object composition in a tree-based data storage has to be conducted, a preferred object composition is that a PC object is composed of hardware categories represented by nodes and its assigned data objects and one result will be the object composition root for searching for particular data.

To achieve this, the object composition structure must be stored in an independent storage device or storing area of the tree-based storage device to b used when creating or manipulating searchable data based on an index prepared by using the corresponding specific object composition.

The composition data should not be held in the entities themselves, but in an additional object structure storing references of entities assigned to a node. This structure maps references of child meta entity containers to is meta entity container parent up to the object composition root either.

Of course, the present invention is also directed to a computer program product and a data recording or storing medium including the steps of the method and enabling the system of the present invention to be run in accordance with the method of the present invention.

In accordance with the following, the figures listed below are briefly explained:
- Figure 1: shows a tree-based system consisting of nodes and entities;
- Figure 2: shows another tree-based structure comprising a mapping scheme according to the invention;
- Figure 3: shows an embodiment in accordance with the invention which explains another mapping scheme;
- Figure 4: shows a cache structure based on in-memory information handling, in particular a JBoss™ cache structure;
- Figure 5: shows an example of a data model of a printing device;
- Figure 6: shows a representation of a cache in-memory persistence, in particular a representation relating to a JBoss™ cache; and
- Figure 7: illustrates a system which is configured to work in accordance with the invention.

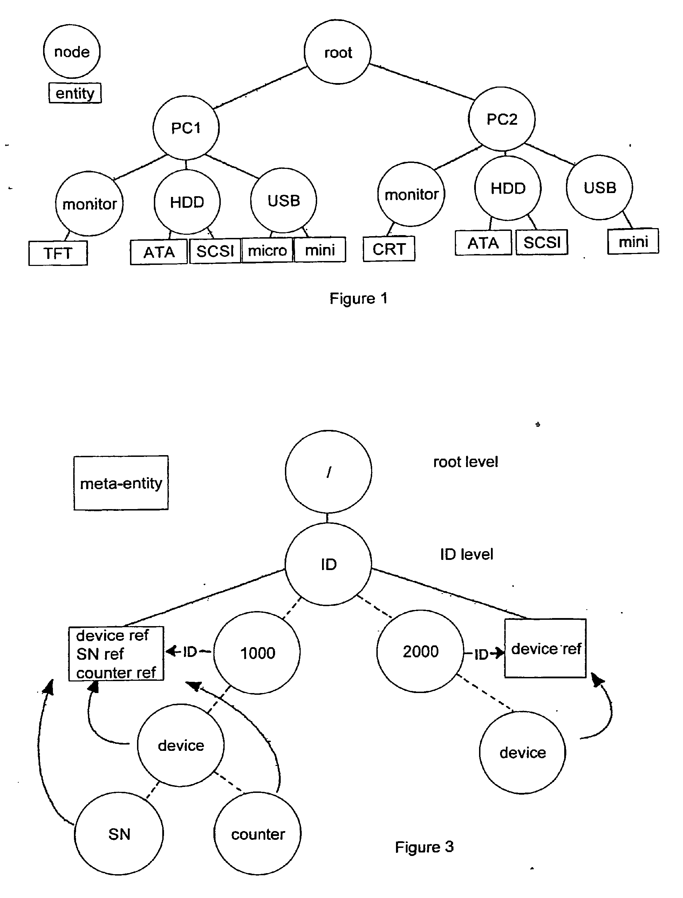

In the following, advantageous embodiments according to the invention will be explained with reference to Figures 1 to 3, wherein specific parts or schemes of one of the embodiments disclosed with reference to Figures 1 to 3 can of course be used in connection with one or more of the other embodiments.

As shown in Figure 1, the tree-based structure of a data storage, in particular a first cache (e.g. a JBoss™ cache) connected to the server of a system, corresponds to the scheme of particular entities like PCs comprising further entities connected to them. In terms of the first cache, the root corresponds to the top node of the tree structure. A node corresponds to a tree object which can store entities and/or other nodes. An entity represents an independent object which is able to store its own data.

A further storage which can be separated to the first cache or be included therein, can be used to store reference and/or mapping data of the object composition structure of the system. For storing composition information a cache can be configured with nodes used as a meta-entity container which is an object of a tree node which stores references to and/or of other entities or other meta-entity containers. An object composition root represents a node which is at the top of the object composition. These terms are also to be understood in accordance with the Java programming language.

In accordance with the invention, a network system is represented in a cache memory in particular having a tree-based structure. The cache memory is positioned so that a structure of addresses and related data can be configured so that the real structure of the network with its parent and child device corresponds thereto. Child device data stored in a memory space related to its connected parent device is provided with address index information assigning this information or data to the matching child device. Without this concept of the invention, it would not be possible to access the data of child device in the cache device, because the cache device would only hold the address data of the parent device of the corresponding child devices, but not the address information of its connected child devices.

Figure 1 shows a diagram of a part of a system within a modifiable network, as represented by a tree-based data storage. Through the root node which is the top node of the tree storage, it is possible to access a particular branch, for example the branch starting with the node "PC₁" or the node "PC₂". Each of these two nodes stores references of and in particular to these entities which are assigned and in particular connected to its superior node and thus to the corresponding "PC₁" and "PC₂" nodes, respectively. Such nodes are tree objects which install entities or also nodes and in particular references to other nodes. Accordingly, the symbols relating to the monitors, the hard disc drives (HDD) and the USB connectors also represent tree objects which hold data and connect subsequent nodes or entities.

In Figure 1, the two object compositions each consist of a PC and sub-ordinate devices (for example a TFT monitor, USB connectors, etc.) and are accessible through a superior node, wherein however PC₁ and PC₂ are each object composition roots. The rectangular symbols (TFT, ATA, SCSI, etc.) represent entities which are independent objects which store the data. If the system is then searched for particular entities having certain capabilities, the result of the search would always be the reference to the entity itself which is sought and not to the superior node through which the entity sought can be accessed.

Accordingly, if for instance a TFT monitor of a certain manufacturer is searched for, the search result will consist of data including address data and in particular index data relating to the TFT monitor. These data do not aid in accessing the TFT monitor itself. Thus, it is not possible to store information about an object composition in an entity in such a way that the entity can be accessed.

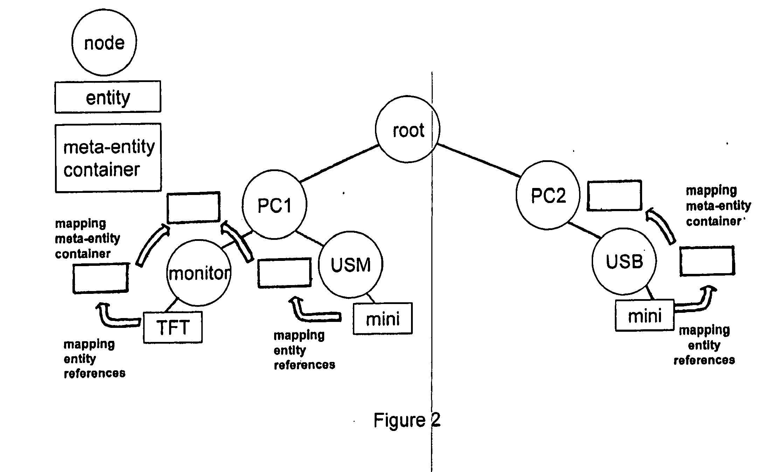

Figure 2 shows how in accordance with the invention, an entity in object compositions - one of them consisting of a PC₁, a monitor and a USM connector, and the other consisting of a PC₂ and a USB connector - can be searched for by assigning an additional object structure, referred to here as a meta-entity container (MEC). This MEC stores references to entities assigned to a node. Accordingly, it is possible to store the structure of the object composition in MECs in superior nodes up to a related object composition root, which in Figures 1 and 2 is PC₁ and/or PC₂, respectively.

Thus, the invention proposes storing references or address information of subsequent entities in superior nodes which are assigned to these subsequent entities. This approach also allows references and in particular address information of subsequent MECs to be mapped to their assigned superior MEC up to the related object composition root of the object composition.

This structure is particularly suitable for being realised in connection with the cache memory device. One kind of cache memory device which seems advantageous is the so-called JBOSS™ cache. This cache memory allows the object composition structure to be supplemented with said meta-entity containers (MECs), such that it is possible to search for reference data and in particular index data by generating a sequence of addresses which is stored in superior nodes (also referred to here as parents) and includes address information or index information about subsequent objects or entities (also referred to here as children).

Thus, if data of an object composition (PC₁, Monitor, HDD, USB, TFT, ATA, SCSI, Micro, Mini) according to Figure 1 are to be stored, the root of the object composition (PC₁ and/or PC₂, respectively, in Figure 1) will be stored in the index. Subsequent nodes (Monitor, HDD, USB, etc.) in the object composition root (PC₁) will be entered into the address or index composition, followed by the final entities (TFT, ATA, etc.), such that a trace for the following nodes and/or entities is stored.

The index data can be stored in another storage or in a storage part of the first cache which can be used by a search engine suitable to search for the data of the object composition. To improve the search speed, the indexed data can be structured to be an optimised representation of these data. According to the invention, a MEC, all its referenced child MECs and its referenced entities are marshalled into the index. This is happening always if a node and/or its entities have been created or changed.

A tree-based data storage such as a cache and in particular a JBoss™ cache can store objects and entities in accordance with the preferable tree structure organisation for the object composition structure of a dynamic or modular system which is to be improved by the present invention. The present invention relates in particular to changes in the system due to plugging-in devices for which the data are to be stored, updated and/or removed. The data structure should be flexible, since the plug-in devices can have a large variety of different data sub-structures provided by different hardware and/or software manufacturers. This difficult situation can be handled by the invention as specified above and in the following.

Taking the JBoss™ cache shown in Figure 3 as an example for implementing the invention, the trace through its tree structure starts with the root node represented by a forward slash "/".A node in the cache has to be addressed using its fully qualified name (referred to as "FQN" in the following). A child node which follows a root node or an intermediate node can store data and/or can relate to children of its own. For example, the FQN of the "counter" could be "/ID/1000/device/counter".

A variety of different search engines are available, and different search engines could be used to implement the invention. A good example of a suitable search engine is the Lucene^{™} search engine which has been developed by the Apache software foundation in a Java language. In this embodiment, it is therefore preferable to write the data in an optimised format in order to be able to search the data using the Lucene^{™} search engine. This optimised format can be an in-memory index.

Such a search index would for example exhibit the following simplified structure:

| Field | Value | Document |
|---|---|---|
| | | |
| | | |

In terms of this structure, the expression "Field" represents a data name, the expression "Value" corresponds to the data value itself, and the expression "Document" corresponds to the data source and - in terms of the present embodiment - to the FQN of the corresponding node.

If the Lucene^{™} search engine then searches for particular data, it will identify the data in the optimised search index but not in the cache itself. Thus, Lucene^{™} will retrieve the FQN of the node which stores the searched and retrieved data if the FQN is the search criterion.

Another example is illustrated below:

| Field | Value | Document |
|---|---|---|
| Serial number | 1234 | /ID/1000/device/SN |
| | 5678 | /ID/2000/device/SN |

In this example, a node in the tree-based structure stores a serial number, wherein this serial-number object corresponds to a numerical value or other kind of distinguishable sequence of symbols and is referred to as the "serial number as specified in the column "Field" in the table". Accordingly, if the Lucene^{™} search engine searches for an object which has the serial number "5678", the result of the search would be the FQN: /ID/2000/device/SN. For further information regarding the Lucene search engine as used in this example, please refer to: http://lucene.apache.org/.

In order to be able to use the Lucene^{™} search engine, it is necessary to take into account the particular capabilities and purposes of Lucene^{™} and to adapt the data sought in accordance with the invention in such a way that the Lucene^{™} search engine can deal with said particular data. In accordance with the purpose of the present invention, a data domain model expressed in Java objects is to be dealt with. Thus, the data which are to be searched are not documents such as those which the Lucene^{™} search engine has been developed for, but rather Java objects. Accordingly, it is necessary to map the Java objects so as to correspond to the Lucene^{™} index. The JBoss™ cache allows changes or modifications to the cache itself to be registered. If, for example, a node is to be added or removed, or if it is necessary to alter some data, then it is possible to notify such changes to a specific interface which is provided by the technology of the JBoss™ cache. If such a change has occurred, the cache or JBoss™ cache can provide specific information about the change, such as for example whether an FQN of a node has been added, cancelled or changed.

It is thus possible in accordance with the principles of the invention to create, delete or update a corresponding search index, wherein it is preferable and advantageous to write each object into the cache not only with its own FQN but also with its superior or parent FQN. Thus, an MEC is created for each node subsequent to the ID level, wherein said MEC contains a meta-entity object. The search ID is assigned to it. As particularly mentioned in Figure 2, a MEC is created for each node on the path to the searched data.

Usually only the MEC on the identification level (PC1, PC2 according to Figures 1 and 2) works as a root MEC. Its search ID contains the FQN of the object or be retrieved due to the search.

All the other child MECs (e.g. monitor, etc.) are mapped to their root MEC. This ensures that if data related to a child entity is searched (e.g. monitor data), the FQN of its parent is returned. This, the relationship of the child entity to its parent entity is one of the results of the search. When object-relational mapping is generated for a particular dynamic and modular system, and if this system is to be subsequently modified or supplemented, it is possible to index all the corresponding data of the Java meta-entity objects and to also index all the related child nodes accordingly, such that it is possible to search for particular data and to find the FQN of the device ID which corresponds to the device which stores said particular data.

It is thus possible in accordance with the invention to search for a device, somewhere in the system, which relates to a certain serial number and a particular value of a counter. If both these data were mapped only with respect to the FQN of the particular device, the search engine would not be able to find the device. If, however, both data are mapped in the index in relation to their correct object root node, the search engine can find and retrieve the object root FQN.

In accordance with another example, in which the system includes a device corresponding to a particular model which has an option which is needed for particular purposes, the information about said particular model is stored in the device node, while the necessary option is stored in an accessory node which can correspond to the entity level in Figure 1. Thus, the necessary option cannot usually be searched for and/or assigned to the device sought. However, if the respective data are mapped in relation to the object root FQN in accordance with the invention, the search engine has no trouble in finding the corresponding device.

Since the data model for common office devices and in particular printing devices is standardised, one approach in accordance with the present invention is to direct specific operations to control the processing of the specific data of the data model of an office device and in particular a printing device. For example, the following operations may have to be taken into consideration:
1. retrieving an entity using a specific FQN and KEY;
2. retrieving all the entities under a specific FQN;
3. persisting an entity using a specific FQN and KEY;
4. persisting all the entities under a specific FQN;
5. removing an entity using a specific FQN and KEY;
6. removing all the entities under a specific FQN;
7. removing all the children under a specific FQN (including sub-nodes and entities) relating to the tree of nodes);
8. retrieving the names of children for a specific FQN.

In accordance with the present invention, the preferred data model for a temporary data memory device is that of a cache memory device exhibiting the structure of a tree of nodes. These data are to be transformed into persistent data which can be stored in a database. Thus, in accordance with the invention, data exhibiting the structure of a temporary data memory device such as a cache which uses the structure of a tree of nodes can be transformed into a structure based on tables and relations to be stored in a relational database. The data stored in the cache have to be mapped in order to be stored in an RDBMS representation, which can for example be achieved using Java persistence API (JPA), wherein the persistence in object-orientated programming relates to the permanence of an object, which is particularly relevant to the contents of object-orientated databases which maintain a distinction between objects created only for the duration of execution and objects intended for permanent storage. Thus, persistence is one of the fundamental elements of the object model.

In accordance with the invention, two kinds of data have to be transformed into a persistent structure. Firstly, the domain model which consists of a number of entities has to be transformed into a persistent model. Secondly, the structure of the temporary data memory device, preferably a cache, has to be transformed in such a way that the data can be assigned to the in-memory structure of the cache, in particular a JBoss™ cache. Once the relevant data have been transformed and mapped on the basis of the loader procedure, the resultant persistent data can be stored in the database.

Thus, in accordance with the invention, it is important that in addition to data relating to the entity as a part of the domain model, information is available which corresponds to the cache structure and in particular consists of FQN and KEY. The latter information defines the KEY under which an entity is to be stored, and in which node in the cache memory device, due to the specific organisation of the JBoss™ cache; the entity itself is already prepared in terms of persistence, such that the necessary mapping information is already provided by TPA. Thus, there is already an extant relationship to a corresponding table which defines how to map the entity data. The structure of the temporary data memory device and in particular the cache can for example be transformed.

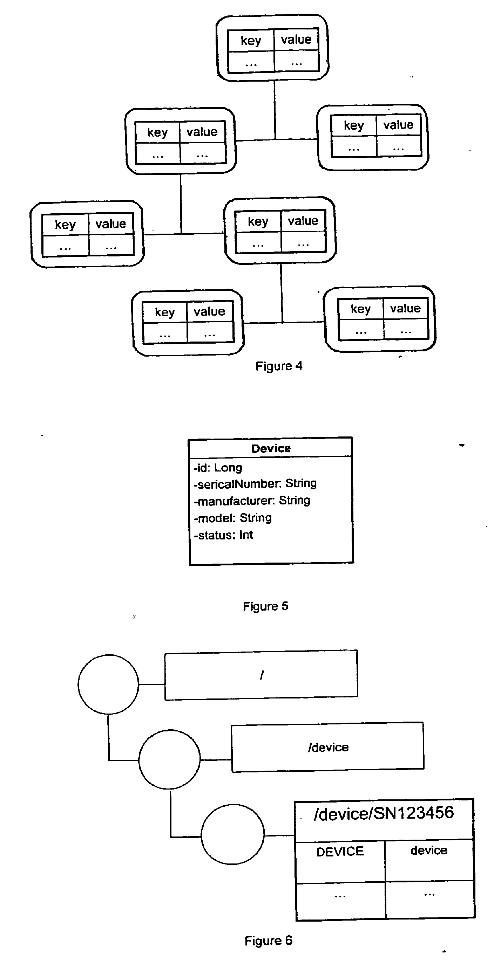

The temporary data memory device of Figure 4, which is in particular a JBoss™ cache, can preferably be organised as a tree of nodes. Each node is uniquely referenced by a fully qualified name (FQN) - for example "/device/SN1234567" and can contain arbitrary objects stored as key-value pairs. This approach is helpful in generating a base for an extendable data structure by providing a starting point for developing arbitrary semantic topologies. It is one of the intentions of the present invention to control the transmission of data coming from a multiplicity of printing devices.

It should be noted that a cache, and in particular the JBoss™ cache, allows for a simplified persistence strategy as a reference implementation. However, this can only be considered as an adequate approach for dealing with ordinary and/or simple applications which do not make substantial demands on application data performance and data maintainability.

Figure 5 shows a representative data model for a printing device. The data model structure can include data relating to said particular device, for example a printing device, a multi-function office device, a facsimile device, a scheme or even a household appliance device, a mobile phone or the like, which can be described and identified by an identifiable ID, a serial number, the manufacturer's name, a model designation, a status, one or more special and/or variable conditions, and so on.

Following the methodology of the JBoss™ cache, it is suitable to store this data model in the cache as shown in Figure 6.

As can be seen in Figure 6, the data semantics are reflected by the graph's node structure which is uniquely addressed via a corresponding FQN, as has already been described with reference to Figures 1 to 3.

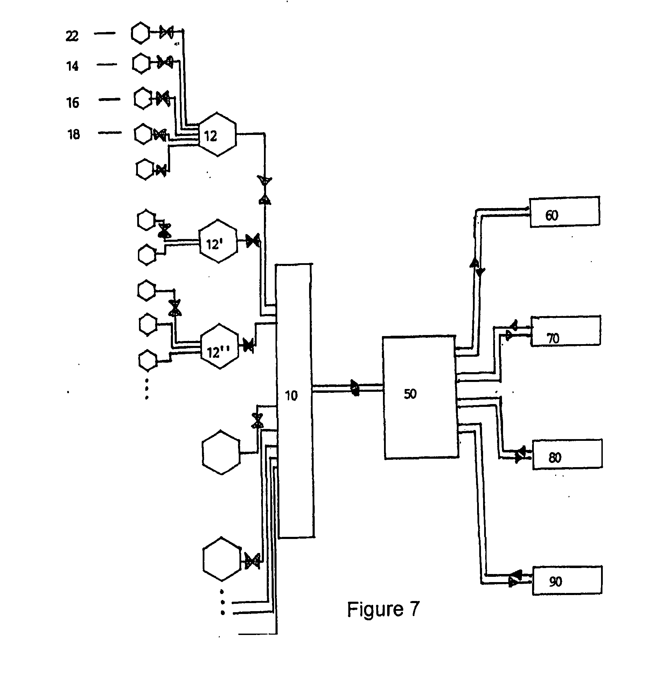

Figure 7 shows a system which is in accordance with the present invention and which is able to perform the method according to the invention and in particular according to the embodiments described with reference to the preceding Figures.

A server 50 is connected to a network 10 to which a larger number of personal computers (PC's) 12, 12', 12", ... is connected. Each of the PC's can subsequently be connected to internal periphery devices like a hard disk drive 14, a DVD or CD drive 2, interfaces and/or to external periphery devices, e.g. a printer 16, a multifunction copier 18 and/or a monitor 20. Corresponding systems in principal have already been illustrated with reference to Figures 1 to 6.

While a two level domain model is mentioned, it is also possible to introduce a three or more level domain mode, which would require FQN's with additional address information.

The server has access to the PCs and to the internal and external periphery devices. The server communicated with all devices connected to the network 10 and creates data about all PC's and their connected periphery devices. The created data can be stored in a cache memory device 60 or another type of memory being configured to have a tree-based storage structure.

A composition data memory 70 again should have a tree-based data storage structure and preferably again is a cache memory device. This memory structure represents the device 12, 12', 12" as parent devices, i.e. their object entities, and their related periphery devices 14, 16, 18, 20, 22 as child devices, i.e. their software entities.

The object composition in principal is that of a particular PC object which is assigned to a specific object composition root, which is a reference to the particular PC object. The child devices are assigned to their particular PCs and are treated as entities which are also treated as software data objects. In terms of the object composition introduced here, a PC object is a composition of hardware categories corresponding to nodes and is assigned to its connected entities. It contains one certain object composition root only. Accordingly, the participants to the object composition are marshalled in a particular order or ranking and references are created between the participants. The composition information is stored in an additional reference data structure, the meta entity container (MEC) storing reference data of entities, e.g. childs, assigned to a nodes, e.g..a parent or PC assigned to a root node. Such information is hold in the composition data memory 70.

An indexing device 80 is connected to the system for generating index data which is assigned to created data stored in the memory device 60 to provide a traceable and thus searchable relationship between the created data stored in the memory device 60 and the composition data stored in the memory device 70. On the basis of the assigned index data a search engine unit 90 is able to search for a particular data object and its relation to the composition. The search engine unit 90 may include or have access to an indexing storage managed by the search engine and being configured and organised to allow an optimised search. One example of the configuration of the indexing storage may be that of a table.

Thus, when storing, updating or removing searchable data related to a device, i.e. it subject, in an object composition (PC2 in this example) the object composition root has to be marshalled into the index. Marshalling the object composition root usually involves marshalling of its children and its referenced entities recursively by utilisation of the object composition root as a primary search key. When a search is performed to find particular entities the object composition root search key is returned. The identified object root can be used to traverse through the assigned entities.

## Claims

1. A method for searching for a device in an object composition of a network stored in a tree-based data storage based on an arbitrary domain model, wherein parent network devices (1000, 2000) are composed with subsequent child devices comprising internal devices or external devices of the related parent network device, the method including the following steps:
- providing a tree-based storage structure in a storage medium, wherein
- a parent network device corresponds to a root node of the tree-based storage structure storing at least one entity and/or other nodes,
- a child device corresponds to an entity, wherein an entity holds its own data,
**characterized by** the method further including the following steps:
- providing an additional tree-based composition storage structure for holding data of entities assigned to a node, wherein composition information is stored in meta entity containers of the tree-based composition storage structure, assigning child device to parent network device relationships to the root assigned to a respective parent network device;
- if data is created which is related to an entity, the created data is a reference to the root node (FQN) of the parent network device related to the entity holding the created data,
- providing index data representing searchable data including at least the created data and the reference to the root node.

2. The method according to claim 1, wherein the domain model includes two, three or further additional layers.

3. The method of claim 1 or 2, wherein the index data is assigned to created data also if the created data are altered and/or manipulated.

4. The method according to one of claims 1 to 3, wherein a search engine is used to search for created, altered and/or manipulated data based on a search index.

5. The method according to claim 1, wherein the search engine creates optimized memory index data for the search.

6. The method according to one of claims 4 or 5, wherein the search index at least includes the following data: data name, data value, data source (FQN).

7. The method according to one of claims 1 to 6, wherein a first cache storage device is used to provide the tree-based storage structure.

8. The method according to one of claims 1 to 7, wherein another cache storage device or a section of the first cache storage device is used to provide the tree-based composition storage structure.

9. A system for searching for devices in a network based on data related to these devices, comprising
a server device for communicating with the devices for collecting data related to these devices,
a first storage device, configured to have a tree-based storage structure for storing an object composition of the connected devices,
another storage device, configured to have a tree-based storage structure for storing reference data to certain root nodes of a composition including a root node;
an indexing device for generating index data wherein said system being further configured to perform the method according to one of claims 1 to 3.

10. The system according to claim 6, further comprising a search engine unit for searching index data related to created data and a root node, wherein the index data preferably being stored in a separate index storage in particular being controlled by the search engine.

11. The system according to one of claims 9 or 10, wherein at least one of the first storage device and the other storage device is a cache memory, in particular a JBoss^{™} cache.

## Patentansprüche

1. Verfahren zum Suchen nach einer Vorrichtung in einer Objektzusammensetzung eines Netzes, die in einem baumbasierten Datenspeicher gespeichert ist, anhand eines beliebigen Domain-Modells, wobei Vorgängernetzvorrichtungen (1000, 2000) aus folgenden Nachfolgervorrichtungen, die interne Vorrichtungen oder externe Vorrichtungen der zugehörigen Vorgängernetzvorrichtung umfassen, zusammengesetzt sind, wobei das Verfahren die folgenden Schritte umfasst:
- Vorsehen einer baumbasierten Speicherstruktur in einem Speichermedium, wobei
- eine Vorgängernetzvorrichtung einem Wurzelknoten der baumbasierten Speicherstruktur, die mindestens eine Einheit und/oder weitere Knoten speichert, entspricht,
- eine Nachfolgervorrichtung einer Einheit entspricht, wobei eine Einheit ihre eigenen Daten enthält,
**dadurch gekennzeichnet, dass** das Verfahren ferner die folgenden Schritte enthält:
- Vorsehen einer zusätzlichen baumbasierten Zusammensetzungsspeicherstruktur, um Daten der einem Knoten zugeordneten Einheiten zu halten, wobei die Zusammensetzungsinformationen in Metaeinheitenbehältern der baumbasierten Zusammensetzungsspeicherstruktur gespeichert sind, wobei Nachfolgervorrichtung-zu-Vorgängervorrichtungs-Beziehungen der einer entsprechenden Vorgängernetzvorrichtung zugeordneten Wurzel zugeordnet werden;
- wobei dann, wenn Daten erzeugt werden, die sich auf eine Einheit beziehen, die erzeugten Daten eine Referenz auf den Wurzelknoten (FQN) der Vorgängernetzvorrichtung, die sich auf die Einheit bezieht, die die erzeugten Daten enthält, sind,
- Vorsehen von Indexdaten, die die durchsuchbaren Daten repräsentieren, die mindestens die erzeugten Daten und die Referenz auf den Wurzelknoten enthalten.

2. Verfahren nach Anspruch 1, wobei das Domain-Modell zwei, drei oder weitere zusätzliche Schichten enthält.

3. Verfahren nach Anspruch 1 oder 2, wobei die Indexdaten den erzeugten Daten auch dann zugeordnet werden, wenn die erzeugten Daten geändert und/oder verarbeitet werden.

4. Verfahren nach einem der Ansprüche 1 bis 3, wobei eine Suchmaschine verwendet wird, um nach erzeugten, geänderten und/oder verarbeiteten Daten anhand eines Suchindexes zu suchen.

5. Verfahren nach Anspruch 1, wobei die Suchmaschine optimierte Speicherindexdaten für die Suche erzeugt.

6. Verfahren nach einem der Ansprüche 4 oder 5, wobei der Suchindex mindestens die folgenden Daten enthält: Datenname, Datenwert, Datenquelle (FQN).

7. Verfahren nach einem der Ansprüche 1 bis 6, wobei eine erste Cache-Speichervorrichtung verwendet wird, um die baumbasierte Speicherstruktur zu liefern.

8. Verfahren nach einem der Ansprüche 1 bis 7, wobei eine weitere Cache-Speichervorrichtung oder ein Abschnitt der ersten Cache-Speichervorrichtung verwendet wird, um die baumbasierte Zusammensetzungsspeicherstruktur zu liefern.

9. System zum Suchen nach Vorrichtungen in einem Netz anhand von Daten, die sich auf diese Vorrichtungen beziehen, das umfasst:
eine Servervorrichtung zum Kommunizieren mit den Vorrichtung zum Sammeln von Daten, die sich auf diese Vorrichtungen beziehen,
eine erste Speichervorrichtung, die konfiguriert ist, eine baumbasierte Speicherstruktur zum Speichern einer Objektzusammensetzung der verbundenen Vorrichtungen zu haben,
eine weitere Speichervorrichtung, die konfiguriert ist, eine baumbasierte Speicherstruktur zum Speichern von Referenzdaten in bestimmten Wurzelknoten einer Zusammensetzung, die einen Wurzelknoten enthält, zu haben;
eine Indexierungsvorrichtung zum Erzeugen von Indexdaten, wobei das System ferner konfiguriert ist, das Verfahren nach einem der Ansprüche 1 bis 3 auszuführen.

10. System nach Anspruch 6, das ferner eine Suchmaschineneinheit zum Suchen von Indexdaten, die sich auf erzeugte Daten und einen Wurzelknoten beziehen, umfasst, wobei die Indexdaten vorzugsweise in einem getrennten Indexspeicher, der insbesondere durch die Suchmaschine gesteuert wird, gespeichert werden.

11. System nach einem der Ansprüche 9 oder 10, wobei die erste Speichervorrichtung und/oder die weitere Speichervorrichtung ein Cache-Speicher, insbesondere ein JBoss^{™}-Cache, ist.

## Revendications

1. Procédé pour rechercher un dispositif dans une composition d'objet d'un réseau stockée dans un stockage de données arborescente sur la base d'un modèle de domaine arbitraire, dans lequel des dispositifs de réseau parents (1000, 2000) sont composés avec dispositifs enfants subséquents comprenant des dispositifs internes ou des dispositifs externes du dispositif de réseau parent connexe, le procédé comprenant les étapes suivantes :
- la fourniture d'une structure de stockage arborescente dans un support de stockage, où
- un dispositif de réseau parent correspond à un noeud racine de la structure de stockage arborescente stockant au moins une entité et/ou d'autres noeuds,
- un dispositif enfant correspond à une entité, où une entité contient ses propres données,
**caractérisé par** le procédé comprenant en outre les étapes suivantes :
- la fourniture d'une structure de stockage de composition arborescente additionnelle pour contenir des données d'entités affectées à un noeud, où des informations de composition sont stockées dans des conteneurs de méta-entité de la structure de stockage de composition arborescente, affecter des relations de dispositif enfant à dispositif de réseau parent à la racine affectée à un dispositif de réseau parent respectif ;
- si des données sont créées qui sont liées à une entité, les données créées sont une référence au noeud racine (FQN) du dispositif de réseau parent lié à l'entité contenant les données créées,
- la fourniture de données d'index représentant des données pouvant faire l'objet d'une recherche, comprenant au moins les données créées et la référence au noeud racine.

2. Procédé selon la revendication 1, dans lequel le modèle de domaine comprend deux, trois couches additionnelles ou plus.

3. Procédé selon la revendication 1 ou 2, dans lequel les données d'index sont affectées à des données créées également si les données créées sont modifiées et/ou manipulées.

4. Procédé selon l'une des revendications 1 à 3, dans lequel un moteur de recherche est utilisé pour rechercher des données créées, modifiées et/ou manipulées sur la base d'un index de recherche.

5. Procédé selon la revendication 1, dans lequel le moteur de recherche crée des données d'index de mémoire optimisées pour la recherche.

6. Procédé selon l'une des revendications 4 ou 5, dans lequel l'index de recherche comprend au moins les données suivantes : le nom de données, la valeur de données, la source de données (FQN).

7. Procédé selon l'une des revendications 1 à 6, dans lequel un premier dispositif de stockage de cache est utilisé pour fournir la structure de stockage arborescente.

8. Procédé selon l'une des revendications 1 à 7, dans lequel un autre dispositif de stockage de cache ou une section du premier dispositif de stockage de cache est utilisé pour fournir la structure de stockage de composition arborescente.

9. Système pour rechercher des dispositifs dans un réseau sur la base de données liées à ces dispositifs, comprenant
un dispositif serveur pour communiquer avec les dispositifs pour collecter des données liées à ces dispositifs,
un premier dispositif de stockage, configuré pour avoir une structure de stockage arborescente pour stocker une composition d'objet des dispositifs connectés,
un autre dispositif de stockage, configuré pour avoir une structure de stockage arborescente pour stocker des données de référence à certains noeuds racines d'une composition comprenant un noeud racine ;
un dispositif d'indexation pour générer des données d'index, où ledit système étant en outre configuré pour effectuer le procédé selon l'une des revendications 1 à 3.

10. Système selon la revendication 6, comprenant en outre une unité de moteur de recherche pour rechercher des données d'index liées à des données créées et à un noeud racine, dans lequel les données d'index étant de préférence stockées dans un stockage d'index séparé en particulier qui est commandé par le moteur de recherche.

11. Système selon l'une des revendications 9 ou 10, dans lequel au moins un du premier dispositif de stockage et de l'autre dispositif de stockage est une mémoire cache, en particulier un cache JBossTM.
